# EUROPEAN PATENT SPECIFICATION

(11) **EP 3 857 056 B1**
(45) Date of publication and mention of the grant of the patent: **24.01.2024**
(21) Application number: 18786643.9
(22) Date of filing: 28.09.2018
(51) Int. Cl.: F03D 13/20, E04H 12/12, F03D 13/10, B29C 64/106, B33Y 10/00, B33Y 30/00, E04G 21/04, E04H 12/34

(54) **METHODS FOR MANUFACTURING WIND TURBINE TOWER STRUCTURE USING MATERIALS WITH DIFFERENT CURE RATES**
VERFAHREN ZUR HERSTELLUNG EINER WINDTURBINENTURMSTRUKTUR UNTER VERWENDUNG VON MATERIALIEN MIT UNTERSCHIEDLICHEN AUSHÄRTUNGSGESCHWINDIGKEITEN
PROCÉDÉS DE FABRICATION D'UNE STRUCTURE DE TOUR D'ÉOLIENNE À L'AIDE DE MATÉRIAUX AYANT DES VITESSES DE DURCISSEMENT DIFFÉRENTES

(43) Date of publication of application: 04.08.2021
(73) Proprietor: General Electric Renovables España, S.L., 08005 Barcelona (ES)
(72) Inventor: TURNQUIST, Norman Arnold, Niskayuna, New York 12309 (US); ERNO, Daniel Jason, Niskayuna, New York 12309 (US); COOPER, Gregory Edward, Schenectady, New York 12345 (US); TOBIN, James Robert, Greenville, South Carolina 29615 (US); LISSIANSKI, Vitali Victor, Niskayuna, New York 12309 (US)
(74) Representative: Zimmermann & Partner Patentanwälte mbB
(86) International application number: PCT/US2018/053423
(87) International publication number: WO 2020/068113

(56) References cited:
- WO-A1-2015/131174
- WO-A2-2015/065936
- DE-A1-102011 107 804
- US-A1- 2016 107 332

## Description

### FIELD

The present disclosure relates in general to wind turbine towers, and more particularly to methods for manufacturing wind turbine tower structures using materials having different cure rates.

### BACKGROUND

Wind power is considered one of the cleanest, most environmentally friendly energy sources presently available, and wind turbines have gained increased attention in this regard. A modem wind turbine typically includes a tower, a generator, a gearbox, a nacelle, and one or more rotor blades. The rotor blades capture kinetic energy of wind using known foil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid.

The wind turbine tower is generally constructed of steel tubes, pre-fabricated concrete sections, or combinations thereof. Further, the tubes and/or concrete sections are typically formed off-site, shipped on-site, and then arranged together to erect the tower. For example, one manufacturing method includes forming pre-cast concrete rings, shipping the rings to the site, arranging the rings atop one another, and then securing the rings together. As wind turbines continue to grow in size, however, conventional manufacturing methods are limited by transportation regulations that prohibit shipping of tower sections having a diameter greater than about 4 to 5 meters. Thus, certain tower manufacturing methods include forming a plurality of arc segments and securing the segments together on site to form the diameter of the tower, e.g. via bolting. Such methods, however, require extensive labor and can be time-consuming. Document WO 2015/065936 A2 refers to an additive manufacturing process of buildings and other structures.

In view of the foregoing, the art is continually seeking improved methods for manufacturing wind turbine towers. Accordingly, the present disclosure is directed to methods for manufacturing wind turbine tower structures using materials having different cure rates. In particular, the present disclosure is directed to methods for manufacturing wind turbine tower structures that utilize multiple additive printing devices that deposit different materials having varying cure rates and strengths.

### BRIEF DESCRIPTION

Aspects and advantages of the invention will be set forth in part in the following description, or may be obvious from the description, or may be learned through practice of the invention.

In one aspect, the present disclosure is directed to a method for manufacturing a tower structure of a wind turbine according to claim 1. The method includes additively printing at least a portion of a frame shape of the tower structure of the wind turbine from a first material on a foundation of the tower structure. The first material has a first cure rate. The method also includes allowing the portion of the frame shape of the tower structure to at least partially solidify. Further, the method includes providing a second material around and/or within the portion of the frame shape such that the portion of the frame shape provides support for the second material. The second material has a second cure rate, the second cure rate slower than the first cure rate. Moreover, the method includes allowing the second material to at least partially solidify so as to form the tower structure.

In one embodiment, providing the second material around and/or within the portion of the frame shape may include at least one of pouring the second material into one or more molds placed around and/or within the portion of the frame shape, spraying the second material around and/or within the portion of the frame shape, or additively printing the second material around and/or within the portion of the frame shape.

According to the invention, the method includes forming one or more voids in the second material. In such embodiments, the method may include providing a third material at least partially within the one or more voids to form one or more reinforcement elements in the tower structure. For example, providing the third material at least partially within the one or more voids may include printing, pouring, and/or inserting the third material at least partially within the void(s).

For example, in certain embodiments, the reinforcement element(s) may include, for example, one or more sensors, elongated cables or wires, helical cables or wires, reinforcing bars (hollow or solid), reinforcing fibers (metallic or polymeric), reinforcing metallic rings (circular, oval, spiral and others as may be relevant) or couplings, mesh, and/or any such elements as may be known in the art to reinforce cementitious structures. In further embodiments, additively printing the second material around and/or within the portion of the frame shape may include additively printing the first material with void(s) formed therein and printing the second material within the void(s).

In several embodiments, the method may include additively printing one or more heat exchange elements into at least one of the first material or the second material to control the curing process. For example, in such embodiments, the heat exchange element(s) may include one or more resistance heating wires and/or one or more cooling tubes configured to receive a coolant therethrough. In addition, the heat exchange element(s) may also include one or more protrusions for providing additional reinforcement to the tower structure.

In particular embodiments, the first, second, or third materials may include a cementitious material, a polymeric material, and/or a metallic material. In another embodiment, the method may include providing an adhesive material between one or more of the first material and the foundation, the first material and the second material, the second material and the third material, and/or multiple layers of the first, second, or third materials.

In yet another embodiment, the various materials may be printed using an additive printing device that includes a first printer head for printing the first material and a second printer head for printing the second material. In such embodiments, the additive printing device may further include, at least, a first robotic arm and a second robotic arm. As such, the first robotic arm may include the first printer head at a distal end thereof for dispensing the first material and the second robotic arm may include the second printer head at a distal end thereof for dispensing the second material.

In another aspect, the present disclosure is directed to a method for manufacturing a tower structure of a wind turbine. The method includes additively printing one or more walls of the tower structure of the wind turbine of a cementitious material on a foundation of the tower structure. The wall(s) have one or more voids formed therein. Further, the cementitious material has a first cure rate. The method also includes allowing the cementitious material to at least partially solidify. Further, the method includes additively printing an additional material within the one or more voids so as to reinforce the wall(s). The additional material has a second cure rate that is slower than the first cure rate. Moreover, the method includes allowing the additional material to at least partially solidify so as to form the tower structure.

In yet another aspect, the present disclosure is directed to a system for manufacturing a tower structure of a wind turbine according to claim 11. The system includes an additive printing device having a central frame structure and a plurality of robotic arms secured to the central frame structure. The robotic arms each include a plurality of printer heads. More specifically, the printer heads are configured for printing at least a portion of a frame shape of the tower structure of the wind turbine of a first material having a first cure rate on a foundation of the tower structure. Further, the printer heads are configured for printing a second material having a second cure rate around and/or within at least a portion of the first material such that the first material provides support for the second material. Moreover, the plurality of printer heads are configured for printing a third material having a third cure rate within one or more voids formed into the second material so as to reinforce the tower structure, the second cure rate being slower than the first cure rate, the third rate being slower than the first and second cure rates. Further, the system includes a controller for controlling the plurality of robotic arms of the additive printing device. It should be understood that the system may further include any of the additional features as described herein.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of one embodiment of a wind turbine according to the present disclosure;
FIG. 2 illustrates a partial, perspective view of one embodiment of a tower structure for a wind turbine manufactured with an additive printing device according to the present disclosure;
FIG. 3 illustrates a schematic diagram of one embodiment an additive printing device according to the present disclosure;
FIG. 4 illustrates a flow diagram of one embodiment of a method for manufacturing a tower structure of a wind turbine according to the present disclosure; and
FIG.5 illustrates a flow diagram of another embodiment of a method for manufacturing a tower structure of a wind turbine according to the present disclosure; and
FIG. 6 illustrates a block diagram of one embodiment of a controller of an additive printing device according to the present disclosure.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims.

Generally, the present disclosure is directed to methods for manufacturing tall structures (e.g. tall towers including wind turbine towers, homes, bridges, etc.) using automated deposition of cementitious materials via technologies such as additive manufacturing, 3-D Printing, spray deposition, extrusion additive manufacturing, concrete printing, automated fiber deposition, as well as other techniques that utilize computer numeric control and multiple degrees of freedom to deposit material. More specifically, methods of the present disclosure include printing large concrete structures with sufficient strength to sustain structural and external loads during the printing process, and at a deposition rate that is cost-effective. In one embodiment, for example, methods of the present disclosure include using multiple printers to deposit different materials with combinations of cure rates and strengths to form a single tower structure.

More specifically, in certain embodiments, a fast-curing frame shape or skeleton of the tower structure can be printed with a relatively low-strength material, and a slower-curing (but stronger) primary material can be printed around it, using the already-cured frame shape for support during the curing process. In addition, the primary material may be printed to include one or more voids therein. As such, an additional, stronger material can printed and/or placed into the voids for providing even more strength to the tower structure. For example, the additional material may include spiral-wound cables/wires or similar to further reinforce the structure. In additional embodiments, internally-printed or placed wires or tubes can be used to control the curing process by introducing heating (via wire resistance) or cooling (coolant flowing through the tubes). The embedded reinforcements may also have protrusions (similar to barbed wire) to provide additional reinforcement capability. In still further embodiments, the tower structure may also be reinforced by a mesh through which the primary material is deposited, which essentially embeds the mesh into the overall tower structure. Additional supporting reinforcements can be printed or placed in regions of high stress, such as doors or other features. Multiple printers can also be used to simultaneously print a primary material and a curing agent, to enable the printed medium to be delivered in a more liquid form and enable the curing time to be controlled more precisely.

Thus, the methods described herein provide many advantages not present in the prior art. For example, methods of the present disclosure utilize materials having different cure rates and/or strengths to reduce the net printing time for the overall tower structure. In addition, methods of the present disclosure take advantage of the fast-curing capabilities of the first material and the strength properties of the second material. As such, the fast-curing capability and high strength property come from different materials. Thus, methods of the present disclosure enable faster tower printing, with a lower overall cost of construction.

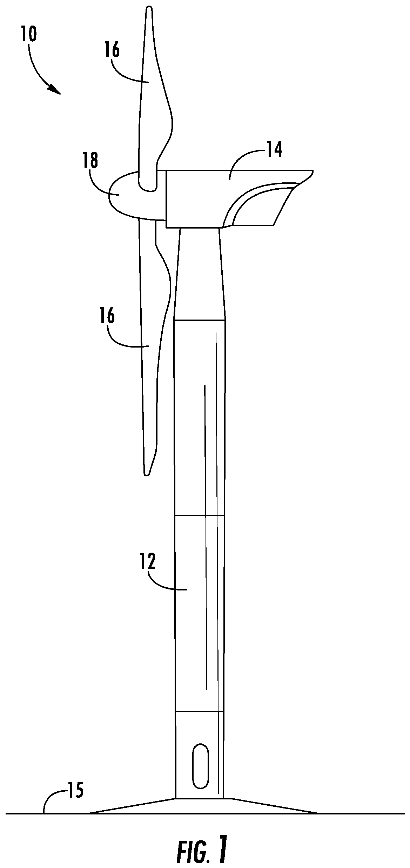

Referring now to the drawings, FIG. 1 illustrates one embodiment of a wind turbine 10 according to the present disclosure. As shown, the wind turbine 10 includes a tower 12 extending from a foundation 15 or support surface with a nacelle 14 mounted atop the tower 12. A plurality of rotor blades 16 are mounted to a rotor hub 18, which is in turn connected to a main flange that turns a main rotor shaft. The wind turbine power generation and control components are housed within the nacelle 14. The view of FIG. 1 is provided for illustrative purposes only to place the present invention in an exemplary field of use. It should be appreciated that the invention is not limited to any particular type of wind turbine configuration. In addition, the present invention is not limited to use with wind turbine towers, but may be utilized in any application having concrete constructions and/or tall towers in addition to wind towers, including for example homes, bridges, tall towers and other aspects of the concrete industry. Further, the methods described herein may also apply to manufacturing any similar structure that benefits from the advantages described herein.

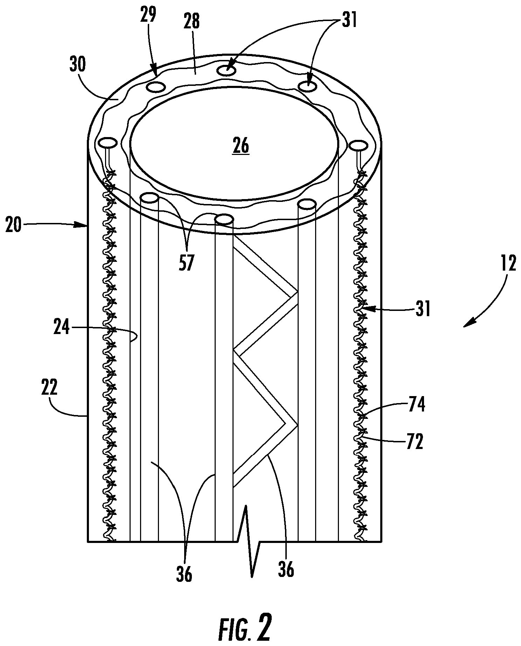

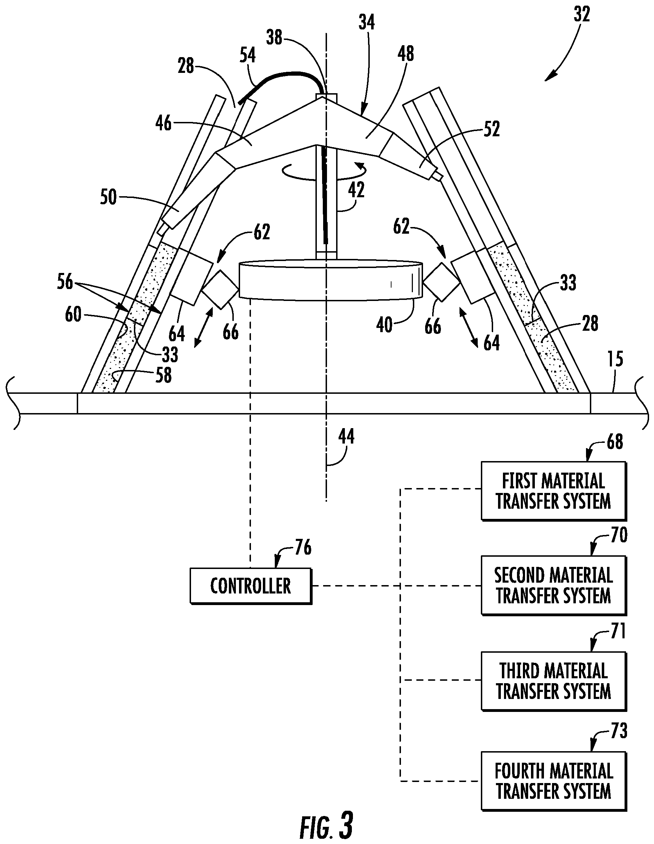

Referring now to FIG. 2, a partial, cross-sectional view of one embodiment of the tower structure 12 of the wind turbine 10 according to the present disclosure is illustrated. As shown, the tower structure 12 defines a circumferential tower wall 20 having an outer surface 22 and an inner surface 24. Further, as shown, the circumferential tower wall 20 generally defines a hollow interior 26 that is commonly used to house various turbine components (e.g. a power converter, transformer, etc.). In addition, as will be described in more detail below, the tower structure 12 is formed, at least in part, using additive manufacturing. Moreover, as shown in the illustrated embodiment, the tower structure 12 may be formed, at least in part, of a frame shape 29 or skeleton formed of a first material 28 having a first cure rate (such as a first, fast-curing cementitious material), a second bulk material 30 having a second cure rate (such as a second, slower-curing cementitious material) that forms the majority of the tower wall 20, and a third material 31 having a third cure rate (such as a third, slowest curing metallic or polymeric material) that provides additional reinforcement to the tower structure 12. In such embodiments, the third cure rate is slower than the second cure rate, which is slower than the first cure rate. As such, the slower-curing second material 30 is configured to provide strong bonding and creates a reinforcement structure over time. In additional embodiments, an adhesive material 33 (e.g. FIG. 3) may also be provided between one or more of the first material 28 and the foundation, the first material 28 and the second material 30, the second material 30 and the third material 31, or multiple layers of the first, second, or third materials 28, 30, 31. Thus, the adhesive material 33 may further supplement interlayer bonding between materials.

In addition, it should be understood that the first, second, and third materials 28, 30, 31 may be any suitable cementitious material, polymeric material, metallic material, adhesive material, and/or combinations thereof. As used herein, the cementitious material described herein may include any suitable workable paste that is configured to bind together after curing to form a structure. As examples, a cementitious material may include lime or calcium silicate based hydraulically setting materials such as Portland cement, fly ash, blast furnace slag, pozzolan, limestone fines, gypsum, or silica fume, as well as combinations of these. In some embodiments, the cementitious material 28 may additionally or alternatively include non-hydraulic setting material, such as slaked lime and/or other materials that harden through carbonation. Cementitious materials may be combined with fine aggregate (e.g., sand) to form mortar, or with rough aggregate (sand and gravel) to form concrete. A cementitious material may be provided in the form of a slurry, which may be formed by combining any one or more cementitious materials with water, as well as other known additives, including accelerators, retarders, extenders, weighting agents, dispersants, fluid-loss control agents, lost-circulation agents, strength-retrogression prevention agents, free-water/free-fluid control agents, expansion agents, plasticizers (e.g., superplasticizers such as polycarboxylate superplasticizer or polynaphthalene sulfonate superplasticizer), and so forth. The relative amounts of respective materials to be provided in a cementitious material may be varied in any manner to obtain a desired effect.

The adhesive material 33 described herein may include, for example, cementitious material such as mortar, polymeric materials, and/or admixtures of cementitious material and polymeric material. Adhesive formulations that include cementitious material are referred to herein as "cementitious mortar." Cementitious mortar may include any cementitious material, which may be combined with fine aggregate. Cementitious mortar made using Portland cement and fine aggregate is sometimes referred to as "Portland cement mortar," or "OPC". Adhesive formulations that include an admixture of cementitious material and polymeric material are referred to herein as "polymeric mortar." Any cementitious material may be included in an admixture with a polymeric material, and optionally, fine aggregate. Adhesive formulations that include a polymeric material are referred to herein as "polymeric adhesive."

Exemplary polymeric materials that may be utilized in an adhesive formulation include may include any thermoplastic or thermosetting polymeric material, such as acrylic resins, polyepoxides, vinyl polymers (e.g., polyvinyl acetate (PVA), ethylene-vinyl acetate (EVA)), styrenes (e.g., styrene butadine), as well as copolymers or terpolymers thereof. Characteristics of exemplary polymeric materials are described in ASTM C1059 / C1059M-13, Standard Specification for Latex Agents for Bonding Fresh To Hardened Concrete.

In particular embodiments, the reinforcing third material 31 may form, for example, one or more sensors, elongated cables or wires, helical cables or wires, reinforcing bars (hollow or solid), reinforcing fibers (metallic or polymeric), reinforcing metallic rings (circular, oval, spiral and others as may be relevant) or couplings, mesh, and/or any such elements as may be known in the art to reinforce cementitious structures. For example, as shown in the illustrated embodiment, the slower-curing reinforcing third material 31 may form vertical components that are optionally interconnected via one or more reinforcing members 36. As such, the reinforced tower structure 12 is configured to withstand wind loads that can cause the tower 12 to be susceptible to cracking.

Referring now to FIGS. 3-4, the present disclosure is directed to methods for manufacturing wind turbine towers via additive manufacturing. Additive manufacturing, as used herein, is generally understood to encompass processes used to synthesize three-dimensional objects in which successive layers of material are formed under computer control to create the objects. As such, objects of almost any size and/or shape can be produced from digital model data. It should further be understood that the additive manufacturing methods of the present disclosure may encompass three degrees of freedom, as well as more than three degrees of freedom such that the printing techniques are not limited to printing stacked two-dimensional layers, but are also capable of printing curved and/or irregular shapes.

Referring particularly to FIG. 3, a schematic diagram of one embodiment of a system 32 for manufacturing the tower structure 12 of the wind turbine 10 at a wind turbine site is illustrated. As shown, the system 32 includes the additive printing device 34, such as a 3D printer. It should be understood that the additive printing device 34 described herein generally refers to any suitable additive printing device having one or more printer heads and/or nozzles for depositing multiple materials with varying cure rates onto a surface that is automatically controlled by a controller 76 to form an object programmed within the computer (such as a CAD file). More specifically, as mentioned, the multiple materials may include the first material 28 having a first cure rate, the second material 30 having a second cure rate, and the third material 31 having a third cure rate, wherein the third cure rate is slower than the second cure rate, which is slower than the first cure rate. Further, as shown in FIG. 3, each of the different materials may include separate fluid transfer systems 68, 70, 71.

More specifically, as shown, the additive printing device 34 includes a central frame structure 38 having a platform 40 and an arm member 42 extending generally perpendicular therefrom. Further, as shown, the arm member 42 extends generally parallel to a central, longitudinal axis 44 of the tower structure 12. In addition, as shown, the additive printing device 34 includes a plurality of robotic arms 46, 48 secured to the arm member 42 of the central frame structure 38. For example, as shown, the additive printing device 34 includes a first robotic arm 46 and a second robotic arm 48 secured to the arm member 42 of the central frame structure 38. Moreover, as shown, the first and second robotic arms 46, 48 include first and second printer heads 50, 52 secured at distal ends thereof, respectively, for additively printing the multiple materials with varying cure rates as described herein. In addition, as shown, the robotic arms 46, 48 may be mounted to rotate around the arm member 42 of the central frame structure 38 during printing of the various materials to build up the tower structure 12.

More specifically, as shown, the first printer head 50 may be configured for printing the frame shape 29 of the tower structure 12 of the first material 28, e.g. on the foundation 15 of the wind turbine 10. For example, referring back to FIG. 2, the frame shape 29 may generally correspond to a base shape or skeleton of the tower structure 12. As such, the second printer head 52 may be configured for printing the second material 30 around and/or within at least a portion of the cured first material 28 to form the tower wall 20 such that the cured first material 28 provides support for the second material 30 during printing. In addition, the tower wall 20 may be formed to include one or more voids 57. In such embodiments, one or more of the printer heads 50, 52 may also be configured for printing the third material 3 1 within the one or more voids 57 formed into the tower wall 20 so as to further reinforce the tower structure 12.

Further, the additive printing device 34 may include at least one nozzle 54 or injector configured for dispensing the cementitious material 28. Moreover, as shown, the system 32 may include one or more optional molds 56 additively printed via the additive printing device 34, e.g. via a polymeric material. It should be understood that the molds 56 described herein may be solid, porous, and/or printed with openings to inject the cementitious material 28. Thus, as shown, the mold(s) 56 define inner and outer wall limits 58, 60 of the tower structure 12. Suitable polymeric materials may include, for example, a thermoset material, a thermoplastic material, a biodegradable polymer (such as a corn-based polymer system, fungal-like additive material, or an algae-based polymer system) that is configured to degrade/dissolve over time, or combinations thereof. As such, in one embodiment, the outer polymer mold may be biodegradable over time, whereas the inner polymer mold remains intact. In alternative embodiments, the outer and inner molds may be constructed of the same material.

In addition, the central frame structure 38 may be mounted between the cured mold(s) 56, or a central location of the tower 12. Thus, after the mold(s) 56 are printed and cured, the printer heads 50, 52 and/or the nozzle 54 of the additive printing device 34 are configured to dispense the cementitious material 28 into the mold(s) 56 within the inner and outer wall limits 58, 60.

Referring still to FIG. 3, the platform 40 of the central frame structure 38 is movable in a vertical direction so as to move the central frame structure 38 (and therefore the plurality of robotic arms 46, 48) along the central, longitudinal axis 44 of the tower structure 12 during printing. Thus, the additive printing device 34 can be linearly translated in the vertical direction for building up the tower structure 12. More specifically, as shown, the additive printing device 34 may include a linear translation mechanism 62 having one or more motorized wheels 64 and at least one linkage mechanism 66 to allow for changes in a diameter of the tower structure 12 as the additive printing device 34 moves along the longitudinal axis 44 to print multiple tower sections.

In addition, as mentioned, the system 32 for manufacturing the tower structure 12 of the wind turbine 10 may also include separate fluid transfer systems for each of the differing materials that can be printed via the additive printing device 34. For example, as shown, the system 32 may include a first fluid transfer system 68 for storing the first material 28, a second fluid transfer system 70 for storing the second material 30, a third fluid transfer system 71 for storing the third material 31, and so on (as well as any other materials used to manufacture the tower structure 12), the connections of which are not shown. However, it should be understood that each of the fluid transfer systems 68, 70, 71 may include, at a minimum, a pump and a storage tank for the respective liquid material that is configured to store and transfer the respective liquid medium to the additive printing device 34.

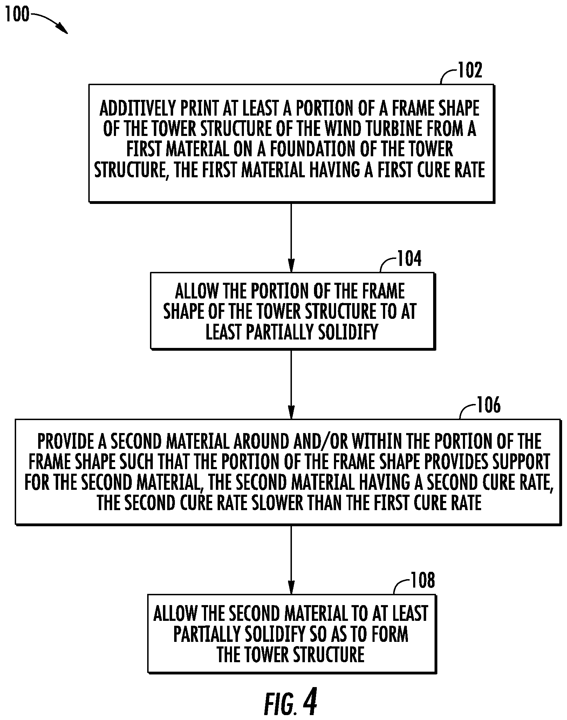

Referring particularly to FIG. 4, a flow diagram of one embodiment of a method 100 for manufacturing a tower structure of a wind turbine at a wind turbine site. In general, the method 100 will be described herein with reference to the wind turbine 10, tower structure 12, and system 32 shown in FIGS. 1-3. However, it should be appreciated that the disclosed method 100 may be implemented with tower structures having any other suitable configurations. In addition, although FIG. 4 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

As shown at (102), the method 100 may include additively printing (e.g. via the additive printing device 34) the frame shape 29 of the tower structure 12 of the wind turbine 10 of the first material 28 on a foundation, e.g. the foundation 15 of the wind turbine 10. As shown at (104), the method 100 may include allowing the first material 28 to at least partially solidify or harden. As mentioned, the first material 28 may correspond to a fast-curing material; therefore, the required solidification time may be minimal.

Thus, as shown at (106), the method 100 may include providing (e.g. by additively printing via the additive printing device 34, spraying, or pouring) the second material 30 around and/or within at least a portion of the first material 28 such that the first material 28 provides support for the second material 30. As shown at (108), the method 100 includes allowing the second material 30 to at least partially solidify so as to form the tower structure 12.

As mentioned, the second material 30 may be a cementitious material having a second cure rate that is slower than the first cure rate. Thus, the second material 30 is also stronger than the first material 28. In addition, as shown in FIG. 2, the second material 30 of the tower structure 12 may be printed to include one or more voids 57. As such, the additive printing device 34 may also be configured to print the third material 31 within the voids 57 to form one or more reinforcement elements 36. As such, the reinforcement element(s) 36 may include, for example, one or more reinforcing sensors, elongated cables or wires, helical cables or wires, reinforcing bars (hollow or solid), reinforcing fibers (metallic or polymeric), reinforcing metallic rings (circular, oval, spiral and others as may be relevant) or couplings, mesh, and/or any such elements as may be known in the art to reinforce cementitious structures.

In several embodiments, the additive printing device 34 may also be configured to print the third material 31 to form one or more heat exchange elements 72, i.e. to further control the curing process. For example, in such embodiments, the heat exchange element(s) 72 may include one or more resistance heating wires and/or one or more cooling tubes configured to receive a coolant therethrough. More specifically, referring back to FIG. 2, the heat exchange elements 72 may correspond to resistance heating wires. In addition, the heat exchange element(s) 72 (and/or any of the reinforcement elements 36 described herein) may also include one or more protrusions 74 for providing additional reinforcement to the tower structure 12.

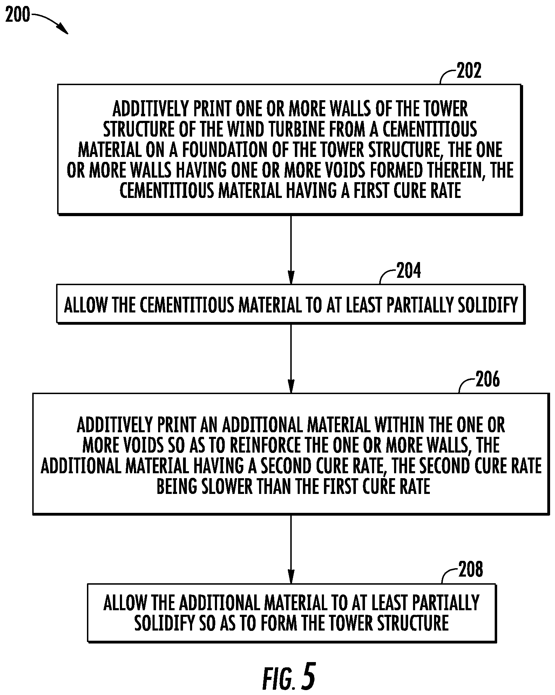

Referring now to FIG. 5, a flow diagram of another embodiment of a method 200 for manufacturing a tower structure of a wind turbine at a wind turbine site. In general, the method 200 will be described herein with reference to the wind turbine 10, tower structure 12, and system 32 shown in FIGS. 1-3. However, it should be appreciated that the disclosed method 200 may be implemented with tower structures having any other suitable configurations. In addition, although FIG. 5 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

As shown at (202), the method 200 may include additively printing (e.g. via the additive printing device 34) one or more walls 20 of the tower structure 12 of the wind turbine 10 of a cementitious material on a foundation of the tower structure 12. Further, the wall(s) include one or more voids 57 formed therein. In addition, the cementitious material has a first cure rate. As shown at (204), the method 200 may include allowing the cementitious material to at least partially solidify or harden. As shown at (206), the method 200 may include additively printing (e.g. via the additive printing device 34) an additional material 31 within the one or more voids 57 so as to reinforce the wall(s) 20. The additional material 31 has a second cure rate that is slower than the first cure rate. Thus, as shown at (208), the method 200 may include allowing the second material to at least partially solidify within the one or more voids 57 so as to form the tower structure 12.

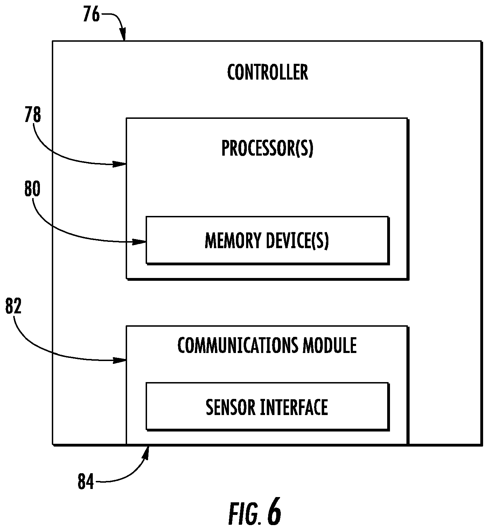

Referring now to FIG. 6, a block diagram of one embodiment of the controller 76 of the additive printing device 34 is illustrated. As shown, the controller 76 may include one or more processor(s) 78 and associated memory device(s) 80 configured to perform a variety of computer-implemented functions (e.g., performing the methods, steps, calculations and the like and storing relevant data as disclosed herein). Additionally, the controller 76 may also include a communications module 82 to facilitate communications between the controller 76 and the various components of the additive printing device 34. Further, the communications module 82 may include a sensor interface 84 (e.g., one or more analog-to-digital converters) to permit signals transmitted from one or more sensors (not shown) to be converted into signals that can be understood and processed by the processors 78. It should be appreciated that the sensors may be communicatively coupled to the communications module 82 using any suitable means.

As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. The processor 78 is also configured to compute advanced control algorithms and communicate to a variety of Ethernet or serial-based protocols (Modbus, OPC, CAN, etc.). Additionally, the memory device(s) 80 may generally comprise memory element(s) including, but not limited to, computer readable medium (e.g., random access memory (RAM)), computer readable non-volatile medium (e.g., a flash memory), a floppy disk, a compact disc-read only memory (CD-ROM), a magnetooptical disk (MOD), a digital versatile disc (DVD) and/or other suitable memory elements. Such memory device(s) 80 may generally be configured to store suitable computer-readable instructions that, when implemented by the processor(s) 78, configure the controller 76 to perform the various functions as described herein.

This written description uses examples to disclose the invention, including the best mode, and also to enable any person skilled in the art to practice the invention, including making and using any devices or systems and performing any incorporated methods. The patentable scope of the invention is defined by the claims.

## Claims

1. A method for manufacturing a tower structure (12) of a wind turbine (10), the method comprising:
additively printing at least a portion of a frame shape (29) of the tower structure (12) of the wind turbine (10) from a first material (28) on a foundation (15) of the tower structure (12), the first material (28) having a first cure rate;
allowing the portion of the frame shape (29) of the tower structure (12) to at least partially solidify;
providing a second material (30) around and/or within the portion of the frame shape (29) such that the portion of the frame shape (29) provides support for the second material (30), the second material (30) having a second cure rate, the second cure rate slower than the first cure rate;
forming one or more voids (57) in the second material (30); and
allowing the second material (30) to at least partially solidify so as to form the tower structure (12).

2. The method of claim 1, wherein providing the second material (30) around and/or within the portion of the frame shape (29) further comprises at least one of pouring the second material (30) into one or more molds (56) placed around and/or within the portion of the frame shape (29), spraying the second material (30) around and/or within the portion of the frame shape (29), or additively printing the second material (30) around and/or within the portion of the frame shape (29).

3. The method of claim 1, further comprising providing a third material (31) at least partially within the one or more voids (57) to form one or more reinforcement elements (36) in the tower structure (12), wherein providing the third material (31) at least partially within the one or more voids further comprises at least one of printing, pouring, or inserting the third material (31) at least partially within the one or more voids (57).

4. The method of claim 3, wherein the one or more reinforcement elements (36) comprises at least one of one or more reinforcing sensors, one or more elongated cables or wires, one or more helical cables or wires, one or more hollow or solid reinforcing bars, one or more reinforcing fibers, one or more reinforcing metallic rings or couplings, and/or mesh.

5. The method of claim 1, further comprising additively printing one or more heat exchange elements (72) in at least one of the first material (28) or the second material (30) to control the curing process.

6. The method of claim 5, wherein the one or more heat exchange elements (72) comprise at least one of one or more resistance heating wires or one or more cooling tubes configured to receive a coolant therethrough.

7. The method of claim 5, wherein at least one of the one or more heat exchange elements (72) comprises one or more protrusions for providing additional reinforcement to the tower structure (12).

8. The method of claim 1, wherein the first, second, or third materials (28; 30; 31) comprise at least one of a cementitious material, a polymeric material, and/or a metallic material.

9. The method of claim 1, further comprising providing an adhesive material (33) between one or more of the first material (28) and the foundation (15), the first material (28) and the second material (30), the second material (30) and the third material (31), or multiple layers of the first, second, or third materials (31).

10. The method of claim 1, wherein providing the portion of the frame shape (29) of the tower structure (12) of the wind turbine (10) from the first material (28) and additively printing the second material (30) around and/or within the portion of the frame shape (29) further comprises using an additive printing device (34) comprising a first printer head (50) for printing the first material (28) and a second printer head (52) for printing the second material (30), the additive printing device (34) comprising, at least, a first robotic arm (46) and a second robotic arm (48), the first robotic arm (46) comprising the first printer head (50) at a distal end thereof for dispensing the first material (28), the second robotic arm (48) comprising the second printer head (52) at a distal end thereof for dispensing the second material (30).

11. A system for manufacturing a tower structure (12) of a wind turbine (10), the system comprising:
an additive printing device (34) comprising a central frame structure (38) and a plurality of robotic arms (46; 48) secured to the central frame structure (38), the plurality of robotic arms (46; 48) comprising a plurality of printer heads (50; 52), the plurality of printer heads (50; 52) configured for printing at least a portion of a frame shape (29) of the tower structure (12) of the wind turbine (10) of a first material (28) having a first cure rate on a foundation (15) of the tower structure (12), the plurality of printer heads (50; 52) configured for printing a second material (30) having a second cure rate around and/or within at least a portion of the first material (28) such that the first material (28) provides support for the second material (30), the plurality of printer heads (50; 52) configured for printing a third material (31) having a third cure rate within one or more voids (57) formed into the second material (30) so as to reinforce the tower structure (12), the second cure rate being slower than the first cure rate, the third rate being slower than the first and second cure rates; and,
a controller (76) for controlling the plurality of robotic arms (46; 48) of the additive printing device (34).

12. The system of claim 11, wherein the third material (31) forms one or more reinforcement elements (36) embedded at least partially in the first material (28), the one or more reinforcement elements (36) comprising at least one of elongated cables or wires, helical cables or wires, reinforcing bars, and/or a mesh.

13. The system of claim 11, further comprising one or more heat exchange elements (72) printed, via the additive printing device (34), into at least one of the first material (28) or the second material (30), the controller (76) commutatively coupled to the one or more heat exchange elements (72) to control the curing process, the one or more heat exchange elements (72) comprising at least of one or more resistance heating wires or one or more cooling tubes configured to receive a coolant therethrough, wherein at least one of the one or more heat exchange elements (72) comprises one or more protrusions for providing additional reinforcement to the tower structure (12).

14. The system of claim 11, wherein the first (28), second (30), or third materials (31) comprise at least one of a cementitious material, a polymeric material, or a metallic material.

15. The system of claim 11, further comprising an adhesive material (33) applied between one or more of the first material (28) and the foundation (15), the first material (28) and the second material (30), or the second material (30) and the third material (31).

## Patentansprüche

1. Verfahren zur Herstellung einer Turmstruktur (12) einer Windturbine (10), wobei das Verfahren umfasst:
Additives Drucken mindestens eines Abschnitts einer Rahmenform (29) der Turmstruktur (12) der Windturbine (10) aus einem ersten Material (28) auf einem Fundament (15) der Turmstruktur (12), wobei das erste Material (28) eine erste Aushärtungsrate aufweist;
Ermöglichen, dass sich der Abschnitt der Rahmenform (29) der Turmstruktur (12) zumindest teilweise verfestigt;
Bereitstellen eines zweiten Materials (30) um und/oder innerhalb des Abschnitts der Rahmenform (29), so dass der Abschnitt der Rahmenform (29) eine Unterstützung für das zweite Material (30) bereitstellt, wobei das zweite Material (30) eine zweite Aushärtungsrate aufweist, wobei die zweite Aushärtungsrate langsamer ist als die erste Aushärtungsrate;
Ausbilden eines oder mehrerer Hohlräume (57) in dem zweiten Material (30); und
Ermöglichen, dass sich das zweite Material (30) zumindest teilweise verfestigt, um die Turmstruktur (12) zu bilden.

2. Verfahren nach Anspruch 1, wobei das Bereitstellen des zweiten Materials (30) um und/oder innerhalb des Abschnitts der Rahmenform (29) ferner mindestens eines umfasst von Gießen des zweiten Materials (30) in eine oder mehrere Formen (56), die um und/oder innerhalb des Abschnitts der Rahmenform (29) angeordnet sind, Besprühen des zweiten Materials (30) um und/oder innerhalb des Abschnitts der Rahmenform (29) oder additives Drucken des zweiten Materials (30) um und/oder innerhalb des Abschnitts der Rahmenform (29).

3. Verfahren nach Anspruch 1, ferner umfassend das Bereitstellen eines dritten Materials (31) zumindest teilweise innerhalb des einen oder der mehreren Hohlräume (57), um ein oder mehrere Verstärkungselemente (36) in der Turmstruktur (12) zu bilden, wobei das Bereitstellen des dritten Materials (31) zumindest teilweise innerhalb des einen oder der mehreren Hohlräume ferner zumindest eines von Drucken, Gießen oder Einsetzen des dritten Materials (31) zumindest teilweise innerhalb des einen oder der mehreren Hohlräume (57) umfasst.

4. Verfahren nach Anspruch 3, wobei das eine oder die mehreren Verstärkungselemente (36) mindestens einen von einem oder mehreren Verstärkungssensoren, einem oder mehreren länglichen Kabeln oder Drähten, einem oder mehreren schraubenförmigen Kabeln oder Drähten, einem oder mehreren hohlen oder massiven Verstärkungsstäben, einer oder mehreren Verstärkungsfasern, einem oder mehreren verstärkenden metallischen Ringen oder Kupplungen und/oder einem Netz umfasst.

5. Verfahren nach Anspruch 1, das ferner das additive Drucken eines oder mehrerer Wärmeaustauschelemente (72) in mindestens einem von dem ersten Material (28) oder dem zweiten Material (30) umfasst, um den Aushärtungsprozess zu steuern.

6. Verfahren nach Anspruch 5, wobei das eine oder die mehreren Wärmeaustauschelemente (72) mindestens einen von einem oder mehreren Widerstandsheizdrähten oder einem oder mehreren Kühlrohren umfassen, die so konfiguriert sind, dass sie ein Kühlmittel durch sie hindurch aufnehmen.

7. Verfahren nach Anspruch 5, wobei mindestens eines der einen oder mehreren Wärmeaustauschelemente (72) einen oder mehrere Vorsprünge zur zusätzlichen Verstärkung der Turmstruktur (12) aufweist.

8. Verfahren nach Anspruch 1, wobei das erste, zweite oder dritte Material (28; 30; 31) mindestens eines umfasst von einem zementartigen Material, einem polymeren Material und/oder einem metallischen Material.

9. Verfahren nach Anspruch 1, ferner umfassend das Bereitstellen eines Klebematerials (33) zwischen einem oder mehreren von dem ersten Material (28) und dem Fundament (15), dem ersten Material (28) und dem zweiten Material (30), dem zweiten Material (30) und dem dritten Material (31) oder mehreren Schichten des ersten, zweiten oder dritten Materials (31).

10. Verfahren nach Anspruch 1, wobei das Bereitstellen des Abschnitts der Rahmenform (29) der Turmstruktur (12) der Windturbine (10) aus dem ersten Material (28) und das additive Drucken des zweiten Materials (30) um und/oder innerhalb des Abschnitts der Rahmenform (29) ferner die Verwendung einer additiven Druckvorrichtung (34) umfasst, die einen ersten Druckkopf (50) zum Drucken des ersten Materials (28) und einen zweiten Druckkopf (52) zum Drucken des zweiten Materials (30) umfasst, wobei die additive Druckvorrichtung (34) zumindest einen ersten Roboterarm (46) und einen zweiten Roboterarm (48) umfasst, wobei der erste Roboterarm (46) den ersten Druckkopf (50) an seinem distalen Ende zum Ausgeben des ersten Materials (28) umfasst, und der zweite Roboterarm (48) den zweiten Druckkopf (52) an seinem distalen Ende zum Ausgeben des zweiten Materials (30) umfasst.

11. System zur Herstellung einer Turmstruktur (12) einer Windturbine (10), wobei das System umfasst:
eine additive Druckvorrichtung (34), die eine zentrale Rahmenstruktur (38) und eine Vielzahl von Roboterarmen (46; 48) umfasst, die an der zentralen Rahmenstruktur (38) befestigt sind, wobei die Vielzahl von Roboterarmen (46; 48) eine Vielzahl von Druckköpfen (50; 52) umfasst, wobei die Vielzahl von Druckköpfen (50; 52) so konfiguriert sind, dass sie mindestens einen Abschnitt einer Rahmenform (29) der Turmstruktur (12) der Windturbine (10) aus einem ersten Material (28) mit einer ersten Aushärtungsrate auf ein Fundament (15) der Turmstruktur (12) drucken, wobei die Vielzahl der Druckköpfe (50; 52) so konfiguriert sind, dass sie ein zweites Material (30) mit einer zweiten Aushärtungsrate und/oder innerhalb mindestens eines Abschnitts des ersten Materials (28) drucken, so dass das erste Material (28) eine Stütze für das zweite Material (30) bereitstellt, wobei die Vielzahl von Druckköpfen (50; 52) so konfiguriert ist, dass sie ein drittes Material (31) mit einer dritten Aushärtungsrate innerhalb eines oder mehrerer Hohlräume (57), die in dem zweiten Material (30) ausgebildet sind, drucken, um die Turmstruktur (12) zu verstärken, wobei die zweite Aushärtungsrate langsamer ist als die erste Aushärtungsrate, wobei die dritte Rate langsamer ist als die erste und zweite Aushärtungsrate; und,
eine Steuerung (76) zum Steuern der Vielzahl von Roboterarmen (46; 48) der additiven Druckvorrichtung (34).

12. System nach Anspruch 11, wobei das dritte Material (31) ein oder mehrere Verstärkungselemente (36) bildet, die zumindest teilweise in das erste Material (28) eingebettet sind, wobei das eine oder die mehreren Verstärkungselemente (36) zumindest eines von länglichen Kabeln oder Drähten, schraubenförmigen Kabeln oder Drähten, Verstärkungsstäben und/oder einem Netz umfassen.

13. System nach Anspruch 11, das ferner ein oder mehrere Wärmeaustauschelemente (72) umfasst, die über die additive Druckvorrichtung (34) in das erste Material (28) und/oder das zweite Material (30) gedruckt werden, wobei die Steuerung (76) mit dem einen oder den mehreren Wärmeaustauschelementen (72) kommutativ verbunden ist, um den Aushärtungsprozess zu steuern, wobei das eine oder die mehreren Wärmetauscherelemente (72) mindestens einen oder mehrere Widerstandsheizdrähte oder ein oder mehrere Kühlrohre umfassen, die so konfiguriert sind, dass sie ein Kühlmittel durch sie hindurch aufnehmen, wobei mindestens eines des einen oder der mehreren Wärmetauscherelemente (72) einen oder mehrere Vorsprünge umfasst, um die Turmstruktur (12) zusätzlich zu verstärken.

14. System nach Anspruch 11, wobei das erste (28), das zweite (30) oder das dritte Material (31) mindestens eines umfasst von einem zementartigen Material, einem polymeren Material oder einem metallischen Material.

15. System nach Anspruch 11, ferner ein Klebematerial (33) umfasst, das zwischen dem ersten Material (28) und dem Fundament (15), dem ersten Material (28) und dem zweiten Material (30) oder dem zweiten Material (30) und dem dritten Material (31) angebracht ist.

## Revendications

1. Procédé de fabrication d'une structure de mât (12) d'une éolienne (10), le procédé comprenant :
l'impression additive d'au moins une partie d'une forme de cadre (29) de la structure de mât (12) de l'éolienne (10) à partir d'un premier matériau (28) sur une fondation (15) de la structure de mât (12), le premier matériau (28) ayant une première vitesse de durcissement ;
le fait de laisser la partie de la forme de cadre (29) de la structure de mât (12) se solidifier au moins partiellement ;
la fourniture d'un deuxième matériau (30) autour et/ou au sein de la partie de la forme de cadre (29) de telle sorte que la partie de la forme de cadre (29) fournit un support pour le deuxième matériau (30), le deuxième matériau (30) ayant une deuxième vitesse de durcissement, la deuxième vitesse de durcissement étant plus lente que la première vitesse de durcissement ;
la formation d'un ou plusieurs vides (57) dans le deuxième matériau (30) ; et
le fait de laisser le deuxième matériau (30) se solidifier au moins partiellement de manière à former la structure de mât (12).

2. Procédé selon la revendication 1, dans lequel la fourniture du deuxième matériau (30) autour et/ou au sein de la partie de la forme de cadre (29) comprend en outre au moins l'un parmi le versement du deuxième matériau (30) dans un ou plusieurs moules (56) placés autour et/ou au sein de la partie de la forme de cadre (29), la pulvérisation du deuxième matériau (30) autour et/ou au sein de la partie de la forme de cadre (29), ou l'impression additive du deuxième matériau (30) autour et/ou au sein de la partie de la forme de cadre (29).

3. Procédé selon la revendication 1, comprenant en outre la fourniture d'un troisième matériau (31) au moins partiellement au sein des un ou plusieurs vides (57) pour former un ou plusieurs éléments de renforcement (36) dans la structure de mât (12), dans lequel la fourniture du troisième matériau (31) au moins partiellement au sein des un ou plusieurs vides comprend en outre au moins l'un parmi l'impression, le versement, ou l'insertion du troisième matériau (31) au moins partiellement au sein des un ou plusieurs vides (57).

4. Procédé selon la revendication 3, dans lequel les un ou plusieurs éléments de renforcement (36) comprennent au moins l'un parmi un ou plusieurs capteurs de renforcement, un ou plusieurs câbles ou fils allongés, un ou plusieurs câbles ou fils hélicoïdaux, une ou plusieurs barres de renforcement creuses ou pleines, une ou plusieurs fibres de renforcement, un(e) ou plusieurs bagues ou couplages métalliques de renforcement, et/ou un maillage.

5. Procédé selon la revendication 1, comprenant en outre l'impression additive d'un ou plusieurs éléments d'échange de chaleur (72) dans au moins l'un parmi le premier matériau (28) ou le deuxième matériau (30) pour commander le processus de durcissement.

6. Procédé selon la revendication 5, dans lequel les un ou plusieurs éléments d'échange de chaleur (72) comprennent au moins l'un parmi un ou plusieurs fils chauffants à résistance ou un ou plusieurs tubes de refroidissement conçus pour recevoir un liquide de refroidissement à travers eux.

7. Procédé selon la revendication 5, dans lequel au moins l'un des un ou plusieurs éléments d'échange de chaleur (72) comprend une ou plusieurs saillies pour fournir un renforcement supplémentaire à la structure de mât (12).

8. Procédé selon la revendication 1, dans lequel les premier, deuxième ou troisième matériaux (28 ; 30 ; 31) comprennent au moins l'un parmi un matériau cimentaire, un matériau polymère, et/ou un matériau métallique.

9. Procédé selon la revendication 1, comprenant en outre la fourniture d'un matériau adhésif (33) entre un ou plusieurs parmi le premier matériau (28) et la fondation (15), le premier matériau (28) et le deuxième matériau (30), le deuxième matériau (30) et le troisième matériau (31), ou multiples couches des premier, deuxième ou troisième matériaux (31).

10. Procédé selon la revendication 1, dans lequel la fourniture de la partie de la forme de cadre (29) de la structure de mât (12) de l'éolienne (10) à partir du premier matériau (28) et l'impression additive du deuxième matériau (30) autour et/ou au sein de la partie de la forme de cadre (29) comprend en outre l'utilisation d'un dispositif d'impression additive (34) comprenant une première tête d'imprimante (50) pour l'impression du premier matériau (28) et une seconde tête d'imprimante (52) pour l'impression du deuxième matériau (30), le dispositif d'impression additive (34) comprenant, au moins, un premier bras robotique (46) et un second bras robotique (48), le premier bras robotique (46) comprenant la première tête d'imprimante (50) au niveau d'une extrémité distale de celui-ci pour distribuer le premier matériau (28), le second bras robotique (48) comprenant la seconde tête d'imprimante (52) au niveau d'une extrémité distale de celui-ci pour distribuer le deuxième matériau (30).

11. Système de fabrication d'une structure de mât (12) d'une éolienne (10), le système comprenant :
un dispositif d'impression additive (34) comprenant une structure de cadre centrale (38) et une pluralité de bras robotiques (46 ; 48) fixée à la structure de cadre centrale (38), la pluralité de bras robotiques (46 ; 48) comprenant une pluralité de têtes d'imprimante (50 ; 52), la pluralité de têtes d'imprimante (50 ; 52) étant conçue pour l'impression d'au moins une partie d'une forme de cadre (29) de la structure de mât (12) de l'éolienne (10) d'un premier matériau (28) ayant une première vitesse de durcissement sur une fondation (15) de la structure de mât (12), la pluralité de têtes d'imprimante (50 ; 52) conçue pour l'impression d'un deuxième matériau (30) ayant une deuxième vitesse de durcissement autour et/ou au sein d'au moins une partie du premier matériau (28) de telle sorte que le premier matériau (28) fournit un support pour le deuxième matériau (30), la pluralité de têtes d'imprimante (50 ; 52) conçu pour l'impression d'un troisième matériau (31) ayant une troisième vitesse de durcissement au sein d'un ou plusieurs vides (57) formés dans le deuxième matériau (30) de façon à renforcer la structure de mât (12), la deuxième vitesse de durcissement étant plus lente que la première vitesse de durcissement, la troisième vitesse étant plus lente que les première et deuxième vitesses de durcissement ; et,
un dispositif de commande (76) pour commander la pluralité de bras robotiques (46 ; 48) du dispositif d'impression additive (34).

12. Système selon la revendication 11, dans lequel le troisième matériau (31 ) forme un ou plusieurs éléments de renforcement (36) incorporés au moins partiellement dans le premier matériau (28), les un ou plusieurs éléments de renforcement (36) comprenant au moins l'un parmi des câbles ou des fils allongés, des câbles ou des fils hélicoïdaux, des barres de renforcement, et/ou un maillage.

13. Système selon la revendication 11, comprenant en outre un ou plusieurs éléments d'échange de chaleur (72) imprimés, par l'intermédiaire du dispositif d'impression additive (34), dans au moins l'un parmi le premier matériau (28) ou le deuxième matériau (30), le dispositif de commande (76) étant couplé en communication aux un ou plusieurs éléments d'échange de chaleur (72) pour commander le processus de durcissement, les un ou plusieurs éléments d'échange de chaleur (72) comprenant au moins l'un parmi un ou plusieurs fils chauffants à résistance ou un ou plusieurs tubes de refroidissement conçus pour recevoir un liquide de refroidissement à travers eux, dans lequel au moins l'un des un ou plusieurs éléments d'échange de chaleur (72) comprend une ou plusieurs saillies pour fournir un renforcement supplémentaire à la structure de mât (12).

14. Système selon la revendication 11, dans lequel les premier (28), deuxième (30) ou troisième matériaux (31) comprennent au moins l'un parmi un matériau cimentaire, un matériau polymère, ou un matériau métallique.

15. Système selon la revendication 11, comprenant en outre un matériau adhésif (33) appliqué entre un ou plusieurs parmi le premier matériau (28) et la fondation (15), le premier matériau (28) et le deuxième matériau (30), ou le deuxième matériau (30) et le troisième matériau (31).
